# EUROPÄISCHE PATENTANMELDUNG

(11) **EP 1 266 794 A2**
(43) Veröffentlichungstag der Anmeldung: **18.12.2002**
(21) Anmeldenummer: 02009728.3
(22) Anmeldetag: 30.04.2002
(51) Int. Cl.: B60N 2/56

(54) **Fahrzeugsitz mit Sitzbelüftung**

(30) Priorität: 12.06.2001 DE 10128415
(71) Anmelder: DaimlerChrysler AG, 70567 Stuttgart (DE)
(72) Erfinder: Pfahler, Karl, Dr., 70180 Stuttgart (DE)

(57) **Zusammenfassung**

Die Erfindung betrifft einen Fahrzeugsitz mit einer Rückenlehne, deren Polster von einem Polsterträger eines Lehnenrahmens getragen ist und eine luftdurchflutbare Ventilationsschicht einer Sitzbelüftungseinrichtung umfasst, wobei ein Ventilator zur Luftversorgung der Ventilationsschicht in die Rückenlehne integriert ist, und wobei die Rückenlehne auf der vom Polster abgewandten Rückseite mit einem Lehnenspannteil verkleidet ist.

Der Ventilator ist direkt am Lehnenspannteil befestigt und mit der Ventilationsschicht über einen Luftkanal verbunden.

## Beschreibung

Die Erfindung betrifft einen Fahrzeugsitz der im Oberbegriff des Patentanspruchs 1 angegebenen Art.

Ein solcher, beispielsweise aus der DE 198 05 173 C1 bekannter Fahrzeugsitz umfasst eine Rückenlehne, deren von einem Polsterträger eines Lehnenrahmens getragenes Polster eine luftdurchflutbare Ventilationsschicht einer Sitzbelüftungseinrichtung aufweist. Zur Luftversorgung der Ventilationsschicht sind dort mehrere Ventilatoren direkt in das Polster der Rückenlehne integriert. Zudem ist die Rückenlehne auf der vom Polster abgewandten Rückseite mit einem Lehnenspannteil aus Kunststoff oder dgl. verkleidet ist.

Durch die Anordnung der Ventilatoren direkt innerhalb des Polsters und daher sehr nahe der Polsteroberfläche können gegebenenfalls unangenehme Lüftervibrationen oder Rattergeräusche vom Sitzinsassen wahrgenommen werden. Außerdem sind die Ventilatoren infolge von durch den Sitzinsassen erzeugter Kräfte einer erhöhten mechanischen Belastung ausgesetzt. Schließlich ist auch die Montage oder ein nachträglicher Austausch der Ventilatoren mit einem erheblichen Arbeitsaufwand verbunden.

Aufgabe der Erfindung ist es daher, einen Fahrzeugsitz der eingangs genannten Art zu schaffen, der einen erhöhten Sitzkomfort aufweist und dessen Ventilator auf einfachere Weise montierbar ist.

Diese Aufgabe wird erfindungsgemäß durch einen Fahrzeugsitz mit den Merkmalen des Anspruchs 1 gelöst. Vorteilhafte Ausgestaltungen der Erfindung sind den übrigen Ansprüchen zu entnehmen.

Bei dem Fahrzeugsitz nach der Erfindung ist der wenigstens eine Ventilator der Rückenlehne direkt an deren Lehnenspannteil befestigt. Durch diese Entkoppelung der Ventilatoren vom Polster können sowohl unangenehme Lüftervibrationen innerhalb des Polsters und damit nahe des Sitzinsassen vermieden als auch durch die entferntere Anordnung des Ventilators Rattergeräusche vom Sitzinsassen ferngehalten werden. Bei der Montage des Fahrzeugsites kann der wenigstens eine Ventilator modulartig direkt an dem Lehnenspannteil befestigt werden, wobei zunächst der Ventilator mit der Ventilationsschicht über ein Luftkanalrohr verbunden wird. Nach dieser Verbindung des Ventilators mit der Ventilationsschicht kann das Lehnenspannteil an der Rückenlehne, beispielsweise am Lehnenrahmen festgelegt werden. Bei einem nachträglichen Austausch des Ventilators kann in umgekehrter Weise zunächst das Lehnenspanteil von der Rückenlehne abgenommen und das Luftkanalrohr vom Polster entfernt werden, wonach der am Lehnenspannteil befestigte Ventilator auf einfache Weise ausgetauscht werden kann.

Wenn das Luftkanalrohr zumindest abschnittsweise längenanpassbar oder flexibel ausgebildet ist, so ist insbesondere bei der Montage ein einfacher Toleranzausgleich des Abstandes zwischen Ventilatorausgang und Ventilationsschicht möglich. Besonders einfach ist dieser Toleranzausgleich durch ein Luftkanalrohr möglich, welches einen als Faltenbalg ausgebildeten Kanalabschnitt aufweist.

Das Luftkanalrohr ist vorzugsweise leicht lösbar mit dem Polster verbunden. Eine solche Verbindung ist beispielsweise geschaffen, indem das Luftkanalrohr mit einem Endabschnitt in eine im Querschnitt an diesen angepasste Polsteröffnung des flexiblen Polsters einsteckbar ist. Durch die Flexibilität des Polsters ist dabei sowohl eine ausreichende kraftschlüssige Sicherung des Luftkanalrohrs innerhalb der Polsteröffnung geschaffen als auch eine ausreichend luftdichte Steckverbindung zwischen Endabschnitt und Polsteröffnung, so dass vom Ventilator in die Ventilationsschicht strömende Luft in diesem Bereich nicht austritt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: einen schematischen Schnitt in Fahrzeuglängsrichtung durch einen erfindungsgemäßen Kraftwagensitz mit einem Sitzkissen und einer Rückenlehne; und in
- Fig. 2: eine vergrößerte Darstellung des schematischen Schnitts gemäß Fig.1 durch die Rückenlehne des erfindungsgemäßen Kraftwagensitzes.

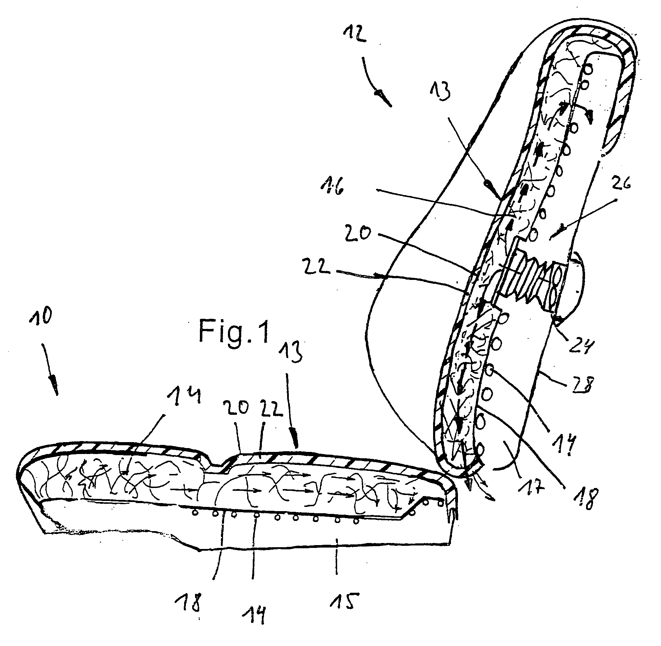

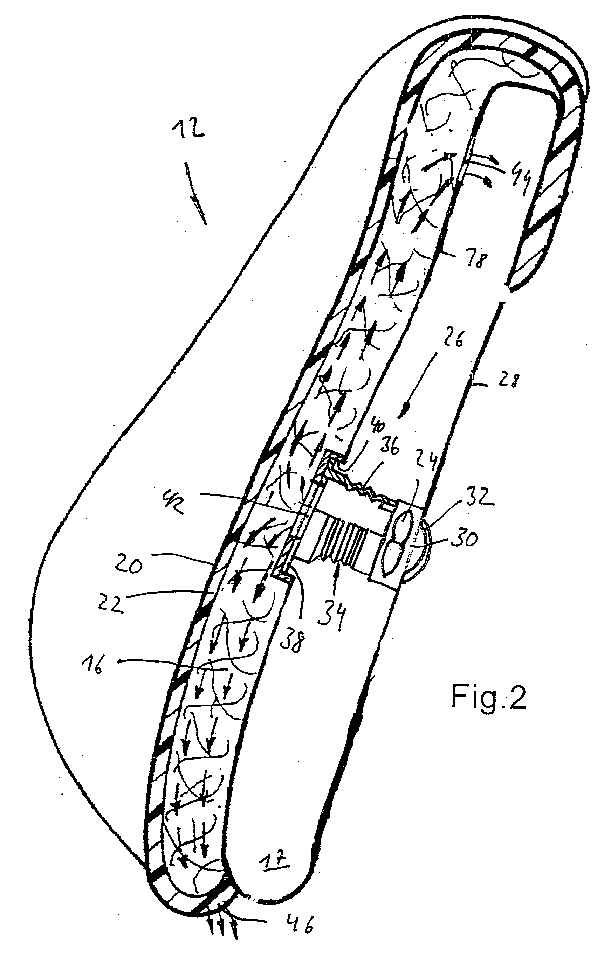

In Fig.1 ist ein schematischer Schnitt in Fahrzeuglängsrichtung durch einen Kraftwagensitz mit Sitzbelüftung dargestellt, welcher ein Sitzkissen 10 und eine Rückenlehne 12 aufweist. Fig.2 zeigt den schematischen Schnitt durch die Rückenlehne 12 dieses Kraftwagensitzes gemäß Fig.1 in vergrößerter Darstellung. Sitzteil 10 und Rückenlehne 12 besitzen jeweils ein Polster 13, das auf einem Polsterträger 14 befestigt ist. Der Polsterträger 14 ist hier aus Federdrähten gebildet, die innerhalb eines jeweiligen Kissen- bzw. Lehnenrahmens 15,17 aufgehängt sind. Zur Sitzbelüftung und gegebenenfalls auch zur Sitzbeheizung umfasst sowohl das Polster des Sitzkissens 10 wie auch der Rückenlehne 12 jeweils eine luftdurchlässige Ventilationsschicht 16 beispielsweise aus grob strukturiertem Vliesmaterial wie Gummihaar oder aus einem Abstandsgewirke, die auf einer zwischen dem Polsterträger 14 und der Ventilationsschicht 16 angeordneten luftundurchlässigen Druckverteilungsschicht 18 aufliegt. Dabei ist die Ventilationsschicht 16 auf deren Unter- oder Rückseite vollständig durch die Druckverteilungsschicht 18 überdeckt. Die von der Druckverteilungsschicht 18 abgekehrte Ober- oder Vorderseite des Polsters 13 des Sitzkissens 10 bzw. der Rückenlehne 12 ist mit einem luftdurchlässigen Polsterbezug 20 aus Textilstoff oder perforiertem Leder überzogen, welcher auf einem zwischen der Ventilationsschicht 16 und dem Polsterbezug 20 angeordneten luftdurchlässigen Bezugsfüllung 22 aus Polsterwatte, Wollvlies oder einem zumindest teilweise perforierten Schaumstoff aufliegt.

Die Ventilationsschicht 16 ist mittels jeweils eines dem Sitzkissen 10 und der Rückenlehne 12 zugeordneten Ventilators 24 mit Luft versorgbar, wobei in den Figuren jeweils nur der Ventilator 24 für die Rückenlehne 12 gezeigt ist. Der Ventilator 24 der Sitzbelüftungseinrichtung 26 der Rückenlehne 12 ist direkt an einem Lehnenspannteil 28 befestigt, welches auf der vom Polster 13 abgewandten Rückseite zur Verkleidung der Rückenlehne 12 vorgesehen und über nicht gezeigte Befestigungsmittel am Lehnenrahmen 17 befestigt ist. Saugseitig des Ventilators 24 ist eine Einströmöffnung 30 (Fig.2) in das Lehnenspannteil 28 eingebracht, welche von einem Zierteil, beispielsweise einer Haube 32 überdeckt ist. Druckseitig ist dem Ventilator 24 ein Luftkanalrohr 34 nachgeschaltet, welches sich zwischen der mit Abstand zueinander angeordneten Ventilationsschicht 16 und dem Ventilator 24 erstreckt. Das Luftkanalrohr 34 umfasst hier in einem mittleren Abschnitt einen als längenanpassbaren, flexiblen Faltenbalg ausgebildeten Kanalabschnitt 36. Mit dem der Ventilationsschicht 16 zugewandten Endabschnitt 38 ist das Luftkanalrohr 34 kraftschlüssig in eine im Querschnitt an diesen angepasste Polsteröffnung 40 des flexiblen Polsters 13 lösbar eingesteckt und ggf. zusätzlich gesichert, wobei die Steckverbindung zwischen dem Endabschnitt 38 und der Polsteröffnung 40 durch die Flexibilität des Polsters zumindest annähernd luftdicht ist. Der durch den Ventilator 24 erzeugte Luftstrom kann über eine Einströmöffnung 42 in der Druckverteilungsschicht 18 in die Ventilationsschicht 16 ein- und durch diese hindurchströmen bis zu einer oberen und unteren Auslassöffnung 44,46, durch welche die austretenden Luftströme in einen zum Fahrgastraum offenen Zwischenraum zwischen dem Polster 13 und dem Lehnenspannteil 28 bzw. direkt in den Fahrgastraum gelangen kann. Der zirkulierende Luftstrom kann dabei sowohl zur Sitzbelüftung und damit zum Abtransport von Körperfeuchtigkeit eines Sitzinsassen als auch - entsprechend beheizt - als Sitzheizung dienen.

Bei der Montage des Fahrzeugsitzes wird der Ventilator 24 gemeinsam mit dem Luftkanalrohr 34 an dem Lehnenspannteil 28 befestigt. Im Anschluss daran wird der polsterseitige Endabschnitt 38 des Luftkanalrohrs 34 in der Polsteröffnung 40 des flexiblen Polsters 13 eingesteckt und ggf. gesichert, bevor das Lehnenspannteil 28 selbst am Lehnenrahmen 17 festgelegt wird. Der Längenausgleich des Luftkanalrohrs 34 bezogen auf den unterschiedlichen Abstand zwischen dem Ventilator 24 und dem polsterseitig eingesteckten Endabschnitt 38 bei unbefestigtem und bei befestigtem Lehnenspannteil 28 erfolgt dabei durch den Faltenbalg 36. Anstelle des Faltenbalgs 36 könnte auch ein teleskopartig verlänger- und verkürzbarer Kanalabschnitt eingesetzt werden.

## Patentansprüche

1. Fahrzeugsitz mit einer Rückenlehne (12), deren Polster (13) eine luftdurchflutbare Ventilationsschicht (16) einer Sitzbelüftungseinrichtung (26) umfasst, wobei wenigstens ein Ventilator (24) zur Luftversorgung der Ventilationsschicht (16) in die Rückenlehne (12) integriert ist, und wobei die Rückenlehne (12) auf der vom Polster (13) abgewandten Rückseite mit einem Lehnenspannteil (28) verkleidet ist,
**dadurch gekennzeichnet,**
**dass** der Ventilator (24) direkt am Lehnenspannteil (28) befestigt und mit der Ventilationsschicht (16) über ein Luftkanalrohr (34) verbunden ist.

2. Fahrzeugsitz nach Anspruch 1,
**dadurch gekennzeichnet,**
**dass** das Luftkanalrohr (34) zumindest abschnittsweise längenanpassbar oder flexibel ausgebildet ist.

3. Fahrzeugsitz nach Anspruch 2,
**dadurch gekennzeichnet,**
**dass** das Luftkanalrohr (34) einen als Faltenbalg ausgebildeten Kanalabschnitt (36) aufweist.

4. Fahrzeugsitz nach Anspruch 1,
**dadurch gekennzeichnet,**
**dass** das Luftkanalrohr (34) leicht lösbar mit dem Polster (13) verbunden ist.

5. Fahrzeugsitz nach Anspruch 5,
**dadurch gekennzeichnet,**
**dass** das Luftkanalrohr (34) mit einem Endabschnitt (38) in eine im Querschnitt an diesen angepasste Polsteröffnung (40) des flexiblen Polsters (13) einsteckbar ist, wobei die Steckverbindung von Endabschnitt (38) und Polsteröffnung (40) im wesentlichen luftdicht ist.
